(19) **Europäisches Patentamt**
**European Patent Office**
**Office européen des brevets**

(11) **EP 2 263 306 B1**

(12) **EUROPÄISCHE PATENTSCHRIFT**

(45) Veröffentlichungstag und Bekanntmachung des Hinweises auf die Patenterteilung:
**04.01.2012 Patentblatt 2012/01**

(21) Anmeldenummer: **09726921.1**

(22) Anmeldetag: **02.04.2009**

(51) Int Cl.:
**H02P 9/00** *(2006.01)*

(86) Internationale Anmeldenummer:
**PCT/EP2009/002411**

(87) Internationale Veröffentlichungsnummer:
**WO 2009/121596 (08.10.2009 Gazette 2009/41)**

(54) **VERFAHREN ZUM BETREIBEN EINER WINDENERGIEANLAGE MIT EINER DOPPELT GESPEISTEN ASYNCHRONMASCHINE SOWIE WINDENERGIEANLAGE MIT EINER DOPPELT GESPEISTEN ASYNCHRONMASCHINE**

METHOD FOR OPERATING A WIND POWER PLANT HAVING A DOUBLY-FED ASYNCHRONOUS MACHINE AND WIND POWER PLANT HAVING A DOUBLY-FED ASYNCHRONOUS MACHINE

PROCEDE DE FONCTIONNEMENT D'UNE EOLIENNE EQUIPEE D'UNE MACHINE ASYNCHRONE A DOUBLE ALIMENTATION ET EOLIENNE EQUIPEE D'UNE MACHINE ASYNCHRONE A DOUBLE ALIMENTATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **02.04.2008 DE 102008017715**

(43) Veröffentlichungstag der Anmeldung:
**22.12.2010 Patentblatt 2010/51**

(73) Patentinhaber: **Nordex Energy GmbH**
**22848 Norderstedt (DE)**

(72) Erfinder:
• **SCHUBERT, Thomas**
**25479 Ellerau (DE)**
• **BELLGARDT, Uwe**
**18069 Rostock (DE)**

(74) Vertreter: **Hauck Patent- und Rechtsanwälte**
**Neuer Wall 50**
**20354 Hamburg (DE)**

(56) Entgegenhaltungen:
**US-A1- 2007 177 314**

• **ERLICH I ET AL: "Integration of Wind Power into the German High Voltage Transmission Grid" POWER ENGINEERING SOCIETY GENERAL MEETING, 2007. IEEE, IEEE, PI, 1. Juni 2007 (2007-06-01), Seiten 1-8, XP031118456 ISBN: 978-1-4244-1296-9**
• **RATHI M R ET AL: "A novel robust low voltage and fault ride through for wind turbine application operating in weak grids" INDUSTRIAL ELECTRONICS SOCIETY, 2005. IECON 2005. 31ST ANNUAL CONFERENCE OF IEEE, IEEE, PISCATAWAY, NJ, USA, 6. November 2005 (2005-11-06), Seiten 2475-2480, XP010876267 ISBN: 978-0-7803-9252-6**

EP 2 263 306 B1

**Beschreibung**

Die vorliegende Erfindung betrifft ein Verfahren zum Betreiben einer Windenergieanlage mit einer doppelt gespeisten Asynchronmaschine sowie eine Windenergieanlage mit einer doppelt gespeisten Asynchronmaschine.

Aus WO 2005/027301 A1 ist ein Verfahren zum Betreiben eines Frequenzumrichters für einen Generator bekannt. Das Verfahren betrifft eine Windenergieanlage mit einem Frequenzumrichter, der einen mit dem Generator verbundenen Umrichter und einen mit dem Netz verbundenen Umrichter aufweist. Das Verfahren sieht vor, dass bei einem deutlichen Abfall der Netzspannung die Spannung in einem Zwischenkreis zwischen den Umrichtern reduziert und ein Ausgangsstrom des netzseitigen Umrichters erhöht wird. Zusätzlich kann die Betriebsfrequenz zur Aussteuerung des netzseitigen Umrichters reduziert werden, um den Ausgangsstrom des netzseitigen Umrichters zu erhöhen.

Aus WO 2004/067958 A1 ist ein Generator für eine Windenergieanlage bekannt, der eine Niederspannungssteuerung zum Durchfahren von Netzfehlern aufweist. Die Steuerung ist vorgesehen, um in zuverlässiger Weise Leistung in das Netz einzuspeisen, wobei insbesondere die Netzanschlussbedingungen der Energieversorgungsunternehmen berücksichtigt werden sollen. Die Anforderungen werden als "low voltage ride through" (LVRT) bezeichnet und geben vor, dass eine Windenergieanlage weiterhin synchronisiert in das elektrische Netz einspeisen soll, wenn ein Spannungsabfall im Netz auftritt. Um diesen Forderungen zu entsprechen, wird vorgeschlagen, beim Auftreten eines Spannungsabfalls die Blattwinkel von einem oder mehreren Rotorblättern zu variieren.

In der Vergangenheit wurden von den Energieversorgungsunternehmen immer neue Netzanschlussregeln für Windenergieanlagen definiert, die besonderes Gewicht auf die FRT-Eigenschaften ("fault ride through") der Windenergieanlagen legen. FRT-Eigenschaften einer Windenergieanlage bezeichnet die Fähigkeit der Windenergieanlage, einen Netzfehler ohne Abschaltung oder netztrennung zu durchfahren. Es existieren zahlreiche unterschiedliche FRT-Varianten, die immer wieder eine Anpassung der Steuerung der Windenergieanlagen notwendig machen. Hierdurch wird es immer wieder erforderlich, die Steuerung der Windenergieanlage - insbesondere die Steuerung der Umrichter - neu auszulegen und neue Steuerverfahren zu entwickeln. Durch die Entwicklungszeit und die nachfolgende Erprobung der neu angepassten Steuerung entstehen Verzögerungen und Kosten, die einer flexiblen Anwendung der Windenergieanlage entgegenstehen.

Aus I. Erlich et al. "Integration of wind power into the German high voltage transmission grid" aus Power Engineering Society General Meeting, 2007, IEEE 24.-28. Juni 2007, Seiten 1-8, ist bekannt, bei einer doppelt gespeisten Asynchronmaschine für eine Windenergieanlage den rotorseitigen Umrichter und den netzseitigen Umrichter jeweils mit unterschiedlichen elektrischen Größen anzusteuern. Ferner ist aus diesem Dokument bekannt, dass eine Trennung der Asynchronmaschine vom Netz nur dann erfolgen darf, wenn die Netzspannung eine vorbestimmte Spannungszeit-Kennlinie unterschreitet.

Der Erfindung liegt die Aufgabe zugrunde, ein Verfahren zum Betreiben einer Windenergieanlage mit einer doppelt gespeisten Asynchronmaschine sowie eine solche Windenergieanlage bereitzustellen, die einfach an unterschiedliche FRT-Anforderungen angepasst werden kann.

Die Aufgabe wird durch ein Verfahren mit den Merkmalen aus Anspruch 1 gelöst. Die Aufgabe wird ebenfalls durch eine Windenergieanlage mit den Merkmalen aus Anspruch 12 gelost. Vorteilhafte Ausgestaltungen bilden die Gegenstande der Unteransprüche.

Das erfindungsgemäße Verfahren dient zum Betreiben einer Windenergieanlage mit einer doppelt gespeisten Asynchronmaschine, die einen netzseitigen und einen generatorseitigen Umrichter aufweist. Bevorzugt sind die Umrichter durch einen Gleichspannungszwischenkreis miteinander verbunden. Ferner ist erfindungsgemäß eine Steuerung vorgesehen, die die Umrichter ansteuert. Das erfindungsgemäße Verfahren weist im Normalbetrieb der Windenergianlage den Schritt auf, dass die Umrichter der Windenergieanlage über die Steuerung durch Führungsgrößen angesteuert werden. Erfindungsgemäß werden die Umrichter in einem Fehlerfall des Netzes von mindestens einem Steuermodul angesteuert, das über Führungsgrößen das Drehmoment und/oder die Wirkleistung sowie den Blindstrom und/oder die Blindleistung derart steuert, dass eine Trennung der Asynchronmaschine vom Netz nur dann erfolgt, wenn die Netzspannung eine vorbestimmte Spannungszeit-Kennlinie unterschreitet. Erfindungsgemäß ist der Verlauf der Spannungszeit-Kennlinie durch mehrere vorwählbare Parameter in dem mindestens einen Steuermodul festgelegt. Das Verfahren setzt eine erste Führungsgrößenfunktion ein, die im Fehlerfall eine Führungsgröße für das Drehmoment und/oder die Wirkleistung vorgibt. Die erste Führungsgrößenfunktion erlaubt es im Fehlerfall, die Führungsgrößen für die Ansteuerung an einem oder beiden Umrichtern vorzugeben. Die Ansteuerung der Umrichter erfolgt sowohl im Normalbetrieb als auch im Fehlerfall über die Führungsgrößen, so dass sich für die Umrichter kein struktureller Unterscheid in ihrer Ansteuerung ergibt. Das erfindungsgemäße Verfahren sieht vor, dass die erste Führungsgrößenfunktion für das Drehmoment und/oder die Wirkleistung mindestens zwei Grundfunktionen aufweist. Von den Grundfunktionen gibt eine erste Grundfunktion den zeitlichen Verlauf des Sollwerts für das Drehmoment und/oder die Wirkleistung nach Eintreten des Fehlerfalls vor, während die zweite Grundfunktion den zeitlichen Verlauf des Sollwerts für das Drehmoment und/oder die Wirkleistung nach Beendigung des Fehlerfalls bestimmt.

Bei dieser Ausgestaltung des Steuermoduls für die erste Führungsgrößenfunktion ist das Steuermodul in zwei Grundfunktionen unterteilt, um das Steuermodul einfacher an unterschiedliche FRT-Anforderungen anpassen zu können. Erfindungsgemäß ist ferner eine zweite Führungsgrößenfunktion vorgesehen, die den Sollwert für die Blindleistung und/oder den Blindstrom bestimmt. Auch die zweite Führungsgrößenfunktion weist zwei Grundfunktionen auf, von denen eine dritte Grundfunktion den zeitlichen Verlauf des Sollwerts für die Blindleistung und/oder den Blindstrom nach Eintreten und eine vierte Grundfunktion den zeitlichen Verlauf des Sollwerts für die Blindleistung und/oder den Blindstrom nach Beendigung des Fehlerfalls bestimmt.

Bei dem erfindungsgemäßen Verfahren sind zusätzlich zu der herkömmlichen Steuerung, die in an sich bekannter Weise die Einspeisung in das Netz steuert, mindestens zwei Führungsgrößenfunktionen vorgesehen, die im Fehlerfall des Netzes vollständig die Steuerung der Umrichter über Führungsgrößen übernehmen, um die FRT-Anforderungen der Netzanschlussrichtlinien einzuhalten. Der Vorteil einer solchen modularen Steuerung der Windenergieanlage liegt darin, dass nicht länger bei einer Änderung der Netzanforderung, die gesamte Steuerung überarbeitet werden muss, sondern aufsetzend auf die Steuerung im Normalbetrieb lediglich ein oder mehrere Führungsgrößenfunktionen mit ihren Grundfunktionen für den Fehlerfall angepasst werden müssen. Indem bei dem erfindungsgemäßen Verfahren die Spannungszeit-Kennlinie die Führungsgrößenfunktionen parametrierbar ist, wird sichergestellt, dass die Führungsgrößenfunktionen für die Anpassung an unterschiedliche FRT-Anforderungen leicht durch die geeignete Wahl der Parameter angepasst werden können. Die Verwendung einer modularen, parametrisierbaren Steuerung erlaubt insgesamt, dass die Führungsgrößenfunktionen nach einer Parametrisierung ohne Eingriff in die Steuerungsabläufe eingesetzt werden können. Die Entwicklungszeiten und die erforderlichen Umstellungszeiten bei einer Änderung der FRT-Anforderung, kann hierdurch deutlich reduziert werden.

In einer bevorzugten Ausgestaltung gibt die erste Führungsgrößenfunktion mit einer Drehmomenten- und/oder Leistungsfunktion dem generatorseitigen Umrichter ein Drehmoment- und/oder Leistungs-Sollwert vor. Dieser zweckmäßigen Ausgestaltung liegt zugrunde, dass in den FRT-Anforderungen aus den Netzanschlussregeln ebenfalls Anforderungen an die Wirkleistungserzeugung (P) der Windenergieanlage während und nach Netzfehlern aufgestellt werden. Für die Wirkleistung (P) gilt der einfache Zusammenhang

$$P = 2\,\pi \cdot n \cdot M,$$

wobei n die Drehzahl und M das Drehmoment bzw. das Luftspaltmoment der Asynchronmaschine ist. Um etwaige Wirkleistungsvorgaben in einem Fehlerfall einhalten zu können, hat es sich als vorteilhaft herausgestellt, eine gesonderte Führungsgrößenfunktion für die entsprechende Drehmomentfunktion im Fehlerfall zu definieren.

In einer bevorzugten Ausgestaltung gibt im Fehlerfall die zweite Führungsgrößenfunktion dem netzseitigen Umrichter den Sollwert für das Drehmoment und/oder die Wirkleistung vor.

In einer bevorzugten Ausgestaltung wird die Netzspannung gemessen und erkennt einen Fehlerfall des Netzes, wenn die Netzspannung eine vorbestimmte Ansprechschwelle unterschreitet. Ein Fehlerfall wird durch die Steuerung dann erkannt, wenn die Netzspannung um einen vorbestimmten Betrag abfällt, sodass eine Ansprechschwelle für den Fehlerfall unterschritten wird. Bevorzugt wird, um eine vorzeitige Auslösung des Fehlerfalls zu verhindern, ein Fehlerfall nur dann erkannt, wenn die Ansprechschwelle mindestens für eine vorbestimmte Zeitdauer unterschritten wird. Sowohl die vorbestimmte Zeitdauer als auch der Wert der Ansprechschwelle sind Parameter, die in der Steuerung abhängig von den Vorgaben der Netzanschlussrichtlinien eingestellt werden können.

Nach einer alternativen Ausgestaltung ist es möglich, dass ein Fehlerfall des Netzes erkannt wird, wenn ein Rotorstrom und/oder eine Zwischenkreisspannung über einen vorbestimmten Grenzwert ansteigt. Der Rotorstrom ist hierbei der Strom, der in den Stromkreis des Rotors fließt. Die Zwischenkreisspannung ist diejenige Spannung, die in dem Gleichspannungszwischenkreis zwischen dem generatorseitigen und dem netzseitigen Umrichter vorliegt.

Bevorzugt reduziert die erste Grundfunktion mit einem ersten Zeitintervall nach Eintreten des Fehlerfalls den Sollwert für das Drehmoment und/oder die Wirkleistung vorzugsweise auf einen Wert nahe Null, in einem zweiten sich anschließenden Zeitabschnitt wird der Sollwert auf einen vorbestimmten Minimalwert angehoben. Zweckmäßigerweise ist der Minimalwert in dem Steuermodul durch Parameter vorgegeben, sodass dieser leicht angepasst werden kann. Bevorzugt ist der Sollwert der ersten Grundfunktion abhängig von einer im Fehlerfall vorhandenen Netzspannung. In einer besonders bevorzugten Ausgestaltung ist die Abhängigkeit des Sollwerts von der Netzspannung und/oder der vorbestimmte Minimalwert der ersten Grundfunktion abhängig davon gewählt, ob ein Fehler in allen Phasen oder in nur einer oder zwei Phasen des Netzes vorliegt. Es wird also bei den Parametern der ersten Grundfunktion unterschieden, ob ein sogenannter symmetrischer Fehler oder ein asymmetrischer Fehler vorliegt, wobei als symmetrischer Fehler ein Fehler in allen Phasen und als asymmetrischer Fehler ein Fehler, der nicht alle Phasen des Netzes betrifft, bezeichnet wird. Durch die zusätzliche Unterscheidung von symmetrischen und asymmetrischen Netzfehlern für die Verwendung von hierfür geeigneten Parametersätzen bietet die erste Grundfunktion ein breites Spektrum, um das Steuermodul ohne großen Aufwand an unterschiedliche FRT-Anforderungen anpassen zu können.

Die zweite Grundfunktion, die erst nach Beendigung des Fehlerfalls den Drehmoment- und/oder Leistungssollwert vorgibt, setzt in einem vorbestimmten Zeitpunkt ein und erhöht den Sollwert für das Drehmoment und/oder die Leistung ab diesem Zeitpunkt bis zu einem vorbestimmten zweiten Zeitpunkt wieder auf den Wert für die Nennleistung und/oder das Nenndrehmoment. Auch bei der zweiten Grundfunktion sind erster und zweiter Zeitpunkt bevorzugt vorwählbare Parameter. Die Parameter für den ersten und den zweiten Zeitpunkt können in dem Steuermodul abhängig von der Anzahl und/oder der Dauer der vorangegangenen Fehlerfälle definiert werden.

Durch die Verwendung der beiden Grundfunktionen der ersten Führungsgrößenfunktion kann das Steuermodul für die Drehmoment- und/oder Wirkleistungssollwerte sehr einfach an unterschiedliche Spannungszeit-Kennlinien angepasst werden.

In einer besonders bevorzugten Ausgestaltung des erfindungsgemäßen Verfahrens wird der Wert der zweiten Führungsgrößenfunktion für den Blindstrom abhängig von der betragsmäßigen Differenz der Netznennspannung und der Netzspannung während des Fehlerfalls bestimmt. Auf diese Weise wird sichergestellt, dass die Windenergieanlage den notwendigen Beitrag zur Netzstützung im Fehlerfall liefert.

Ferner kann vorgesehen sein, dass der maximale Sollwert für den Blindstrom während des Fehlerfalls auf einen vorbestimmten Maximalwert begrenzt ist. Durch die Verwendung der dritten und vierten Grundfunktion für die zweite Führungsgrößenfunktion kann auch die zweite Führungsgrößenfunktion einfach für unterschiedliche Spannungszeit-Kennlinien angepasst werden.

Erfindungsgemäß wird die Aufgabe ebenfalls durch eine Windenergieanlage mit einer doppelt gespeisten Asynchronmaschine gelöst, die einen netzseitigen und einen generatorseitigen Umrichter und eine Steuerung aufweist, wobei die Steuerung im Normalbetrieb über Führungsgrößen die Umrichter ansteuert. Die erfindungsgemäß ausgebildete Steuerung besitzt ein Fehlererkennungsmodul, das im Fehlerfall des Netzes eine Ansteuerung der Umrichter durch mindestens ein Steuermodul auslöst. Das mindestens eine Steuermodul steuert über Führungsgrößen die Umrichter derart, dass eine Trennung der Asynchronmaschine vom Netz unterbleibt, solange die Netzspannung eine vorbestimmte Spannungszeit-Kennlinie nicht unterschreitet. Über die Führungsgrößen wird einerseits ein Drehmoment und/oder eine Wirkleistung sowie andererseits ein Blindstrom und/oder eine Blindleistung den Umrichtern vorgegeben. Die Steuerung der erfindungsgemäßen Windenergieanlage besteht aus einem Fehlererkennungsmodul und mindestens einem Steuermodul, um auf einen Fehlerfall im Netz reagieren zu können, wobei der modulare Aufbau der Steuerung eine einfache Anpassung an unterschiedliche FRT-Anforderungen erlaubt. Erfindungsgemäß ist in dem mindestens einen Steuermodul der Verlauf der Spannungszeit-Kennlinie durch vorwählbare Parameter definiert. Hierdurch kann die modulare Steuerung der erfindungsgemäßen Windenergieanlage in einfacher Weise für die FRT-Anforderungen der Netzbetreiber umparametrisiert und angepasst werden. Erste und zweite Führungsgrößenfunktion weisen mehrere vorwählbare Parameter auf, die den zeitlichen Verlauf der Sollwerte definieren.

Bevorzugt weist die erfindungsgemäße Anlage einen Umschalter auf, der von dem Fehlererkennungsmodul angesteuert wird, um die Umrichter von der Steuerung für den Normalfall, beispielsweise eine Betriebsführung der Windenergieanlage, zu trennen und mit den Steuermodulen zu verbinden.

Bevorzugt sind die Führungsgrößenfunktionen wieder in Grundfunktionen unterteilt, von denen eine die Sollwerte während des Fehlerfalls (erste und dritte Grundfunktion) und eine andere nach dem Fehlerfall vorgibt (zweite und vierte Grundfunktion).

Eine bevorzugte Ausführung der Erfindung wird nachfolgend an einem Beispiel näher erläutert. Es zeigt:

Fig. 1          den erfindungsgemäßen Aufbau einer modularen Steuerung für eine doppelt gespeiste Asynchronmaschine,

Fig. 2          die herkömmliche Steuerung einer doppelt gespeisten Asynchronmaschine,

Fig. 3          eine durch Parameter festgelegte Spannungszeit-Kennlinie,

Fig. 4          den Drehmomentverlauf im Fehlerfall,

Fig. 5          die erste Grundfunktion für den Drehmomentverlauf im Fehlerfall,

Fig. 6          die zweite Grundfunktion für den Drehmomentverlauf im Fehlerfall und

Fign. 7a bis 7c   den Verlauf von Netzspannung, Blindstrom und Drehmoment im Fehlerfall.

Bei einer Windenergieanlage wird die mechanische Leistung des Rotors über den Antriebsstrang im Generator in elektrische Leistung umgeformt. Der Generator 19 ist hierbei über zwei elektrische Kreise mit dem Netz gekoppelt. Der Statorkreis 10 ist direkt mit dem Netz 12 gekoppelt. Der Rotorkreis 14 ist indirekt über den Frequenzumrichter 16 mit dem Netz 12 gekoppelt. Dem Frequenzumrichter 16 kommt die Aufgabe zu, den Generator 19 zu regeln. Allgemein betrachtet fließt die Energie von der mechanischen Energie des Rotors über den Generator ins elektrische Netz. Fehler im Netz, wie beispielsweise Spannungseinbrüche, wirken aufgrund der Verbindung des Generators mit dem Netz auf die Windenergieanlage zurück. Die Netzanschlussregeln für Windenergieanlagen sehen daher für Windenergie-anlagen spezielle Kriterien für das Durchfahren eines Netzfehlers ohne Abschaltung oder Netztrennung der Windenergieanlage vor. Dieses Verhalten der Windenergieanlage wird auch als "fault ride through" ("FRT") bezeichnet.

Generator 19, Frequenzumrichter 16 und Antriebsstrang (nicht dargestellt) als Hauptkomponenten der Windenergieanlage sind unmittelbar oder mittelbar mit dem elektrischen Netz gekoppelt. Abhängig von Vorgängen im Netz sind die Hauptkomponenten damit mechanischen Belastungen ausgesetzt. Aus diesen Gründen ist es erforderlich, das FRT-Verhalten bzw. die Steuerung der Windenergieanlage für den Fehlerfall zu definieren, um die mechanischen und elektrischen Belastungen der Windenergieanlage mit den Anforderungen der Netzanschlussregeln in Einklang zu bringen.

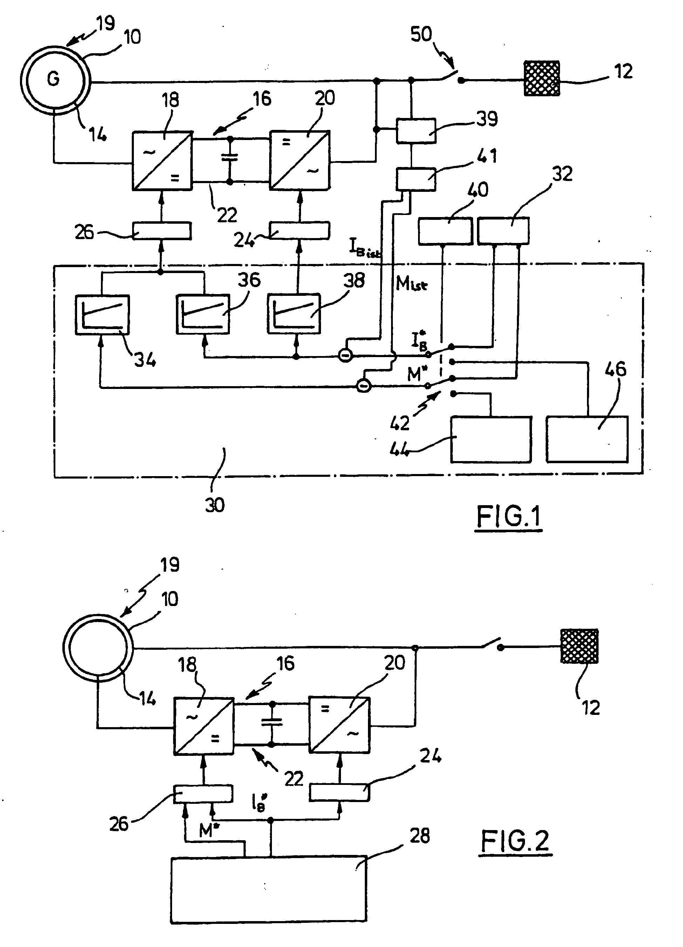

Bevor die erfindungsgemäß Steuerung der Windenergieanlage näher beschrieben wird, sei zunächst die herkömmliche Steuerung einer Windenergieanlage kurz anhand von Figur 2 erläutert. Wie bereits erwähnt, ist der Statorkreis 10 direkt mit Netz 12 verbunden. Der Rotorkreis 14 ist über einen Frequenzumrichter 16 ebenfalls mit den Netz 12 verbunden. Der Frequenzumrichter 16 besitzt einen generatorseitigen Umrichter 18 und einen netzseitigen Umrichter 20. Die Umrichter 18, 20 sind über einen Gleichspannungszwischenkreis 22 miteinander verbunden. Jeder der Umrichter 18, 20 wird über eine Pulsweitenmodulation 24, 26 angesteuert. Die Steuerung 28 des Frequenzumrichters 16 gibt zur Steuerung dem generatorseitigen Umrichter 18 einen Sollwert für das Drehmoment M* und einen Sollwert für den Blindstrom $I_B$* vor.

Wenn nachfolgend auf Drehmoment M* abgestellt wird, kann dies auch stets durch einen Sollwert für die Wirkleistung P* ersetzt werden. Ebenso kann der Blindstrom $I_B$* stets durch einen Sollwert für die Blindleistung Q* ersetzt werden.

Dem netzseitigen Umrichter 20 wird von der Steuerung 28 ein Sollwert für den Blindstrom $I_B$* vorgeben.

Bei der in Figur 2 dargestellten Steuerung ist es möglich, die Blindleistung und das Drehmoment getrennt voneinander einzustellen bzw. zu regeln. Die Sollwerte M* für das Drehmoment und $I_B$* für den Blindstrom dienen als Führungsgrößen und werden innerhalb der Steuerung 28 des Frequenzumrichters 16 generiert. Anschließend werden diesen Sollwerten entsprechende Pulsmuster erzeugt, woraus sich eine für den Rotor des Generators eingeprägte dreiphasige Spannung ergibt, die im Generator die Erzeugung der den Führungsgrößen entsprechenden Blindleistungen und des Drehmoments bewirkt. Durch die Regelbarkeit des Asynchrongenerators nach Drehmoment und Blindstrom sind die technischen Voraussetzungen geschaffen, um auf FRT-Anforderungen reagieren zu können.

Da hohe Echtzeitanforderungen an die FRT-Steuerung gestellt werden, müssen diese prozessnah implementiert werden. Vor diesem Hintergrund waren die FRT-Verfahren bisher stets integraler Bestandteil der Steuerung 28.

Bei der erfindungsgemäßen Steuerung, wie sie in Figur 1 darstellt ist, ergibt sich ein anderer Aufbau und eine andere Funktionalität der Steuerung. Zur besseren Übersicht sind auch in Figur 1 die Komponenten, die die gleiche Funktion wie in der herkömmlichen Steuerung gemäß Figur 2 erfüllen, mit gleichen Bezugszeichen belegt. Bei der erfindungsgemäßen Steuerung 30 liegen die Sollwerte M* und $I_B$* als Führungsgrößen im Normalbetrieb an der Steuerung 30 an. In Figur 1 ist eine Steuerung 32 für den Normalbetrieb vorgesehen. Der Steuerung 32 können allgemeine Größen der Betriebsführung von extern (nicht dargestellt), beispielsweise von einer Betriebsführung der Windenergieanlage, vorgegeben werden.

Die von der Steuerung 32 bestimmten Sollwerte M* und $I_B$* liegen über Regler 34, 36, 38 an den Umrichtern 18, 20 an, wobei ebenfalls durch die Pulsweitenmodulation 24 und 26 die für die Steuerung der Umrichter erforderlichen Pulsmuster generiert werden. Die Regler 34, 36 und 38 führen einen Vergleich mit den Istwerten für das Drehmoment $M_{-ist}$ und den Blindstrom $I_{B-ist}$ durch. Um die Ist-Werte zu bestimmen, werden in einer Messeinrichtung 39 beispielsweise der Rotorstrom und die Statorspannung gemessen. In eine Transformationseinrichtung 41 werden diese gemessenen Größen in die Istwerte für das Drehmoment $M_{-ist}$ und den Blindstrom $I_{B-ist}$ transformiert. Die Transformation erfolgt abhängig von der Drehzahl des Generators (nicht dargestellt). Aus der Differenz zwischen Istwert und Sollwert wird die Regelgröße für die Regler 34 bis 38 gebildet.

Die Regelgröße für den Sollwert des Drehmoments M* liegt an dem generatorseitigen Umrichter 18 an, während die Regelgröße für den Sollwert für den Blindstrom $I_B$* an beiden Umrichtern 18, 20 anliegt.

In Figur 1 ist ein Fehlererkennungsmodul 40 vorgesehen, das über einen Schalter 42 im Fehlerfall die Umrichter 18, 20 von den Sollwerten der Steuerung 32 trennt und an zwei Steuermodule 44, 46 anschließt.

In Figur 1 wird bereits deutlich, dass durch das Umschalten des Fehlererkennungsmoduls 40 es möglich ist, eine herkömmliche Steuerung für die Umrichter 18, 20 einzusetzen, die unabhängig von den speziellen Vorgaben für den Fehlerfall im Netz arbeitet. Lediglich im Fehlerfall erfolgt über den Schalter 42 ein Umschalten und die Steuermodule 44, 46 übernehmen die Aufgabe der Steuerung 32. Von den Steuermodulen ist das Steuermodul 44 als Drehmomentfunktion, mithin als erste Führungsgrößenfunktion, ausgebildet, die für den Fehlerfall einen Sollwert für das Drehmoment M* vorgibt. Das Steuermodul 46 ist als Stromfunktion, mithin als zweite Führungsgrößenfunktion ausgebildet, das im Fehlerfall einen Sollwert für die Blindleistung und/oder den Blindstrom $I_B$* vorgibt.

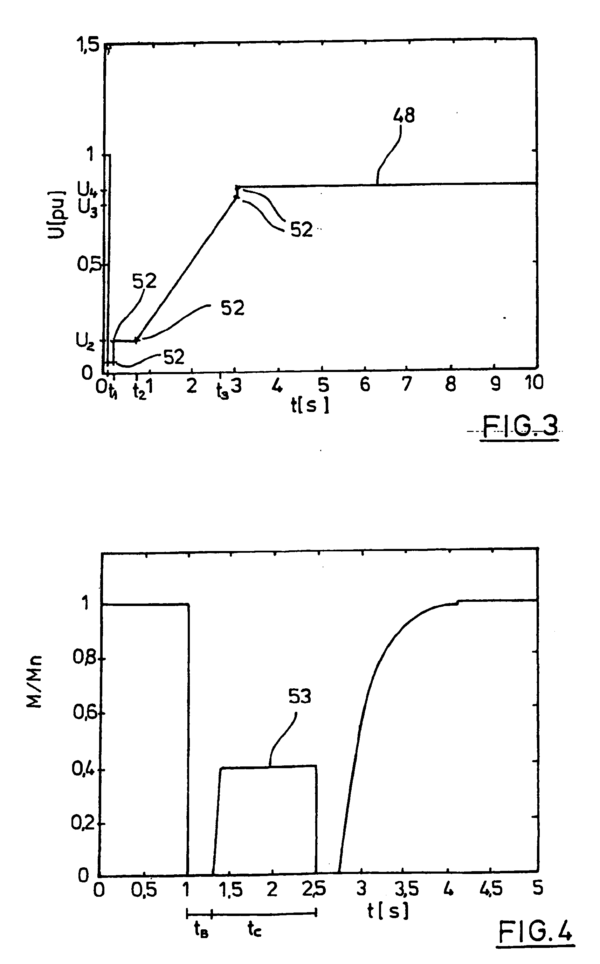

In den Steuermodulen 44 und 46 ist jeweils eine Spannungszeit-Kennlinie 48 abgelegt, wie sie in Figur 3 beispielhaft dargestellt ist. Die Spannungszeit-Kennlinie aus Figur 3 ist durch frei wählbare Stützpunkte 52 definiert, die im vorliegenden Beispiel jeweils über Linien miteinander verbunden sind. Die Spannungszeit-Kennlinie in Figur 3 beschreibt einen sogenannten Spannungstrichter, wobei die Anforderungen des Netzbetreibers besagen, dass so lange die Netzspannung größer als der durch die Spannungszeit-Kennlinie 48 vorgegebene Spannungswert ist, eine Netztrennung der Windenergieanlage nicht erfolgen darf. Das heißt bei dem doppelt gespeisten Asynchrongenerator, dass der Schalter 50 aus Figur 1 geschlossen bleiben muss.

Der durch die Spannungszeit-Kennlinie 48 vorgegebene Spannungstrichter ist dadurch gekennzeichnet, dass die Windenergieanlage in einem ersten kurzen Zeitintervall bis $t_1$ auch trotz eines sehr weitgehenden Spannungseinbruchs am Netz bleiben muss. In einem zweiten Zeitintervall von $t_1$ bis $t_2$ darf die Windenergieanlage sich nur vom Netz abtrennen, wenn die Netzspannung unterhalb des Spannungswerts $U_2$ liegt. Sollte sich in einem Zeitintervall $t_2$ bis $t_3$ die Netzspannung nicht mindestens linear bis zu einem Spannungswert von $U_3$ wieder ansteigen, darf die Windenergieanlage vom Netz getrennt werden. Für einen anschließenden längeren Bereich muss die Windenergieanlage an dem Netz betrieben werden, wenn der Spannungswert von $U_4$ überschritten wird. Durch die in Figur 3 beispielhaft durch Kreuze eingezeichneten Stützpunkte 52 ist es möglich, die Spannungszeit-Kennlinie allgemein für die Steuerung zu definieren. Beispielsweise können durch geeignete Stützpunkte die Spannungswerte im Intervall $t_1$ bis $t_2$ auf einen durch die Einspeiserichtlinien vorgegebenen Wert gesetzt werden.

Die Steuerung der Steuermodule 44 und 46 erfolgt derart, dass die Sollwertvorgaben M* und $I_B$* erfolgen, damit sich die Windenergieanlage nicht vom Netz trennt und Detailanforderungen der Netzbetreiber genügen.

Figur 4 zeigt beispielhaft den Verlauf der ersten Führungsgrößenfunktion als Drehmomentfunktion 53 aus dem Steuermodul 44. In einem ersten Zeitintervall $t_B$ - zu dessen Beginn der Netzfehler einsetzt - wird die Sollwertvorgabe für das Drehmoment auf Null gesetzt. In einem zweiten Zeitintervall $t_C$ erfolgt eine Sollwertvorgabe für das Moment von ungefähr 40 % des Nennmoments. In einem anschließenden Zeitintervall, das sich ungefähr von 2,5 Sekunden bis 2,7 Sekunden erstreckt, wird erneut ein Momentsollwert mit dem Wert Null an den generatorseitigen Umrichter 18 angelegt. In einem darauffolgenden Zeitintervall wird der Sollwert für den generatorseitigen Umrichter 18 ungefähr e-funktionsförmig wieder auf den Nennwert für das Drehmoment erhöht. Die in Figur 4 dargestellte Drehmomentfunktion ist abhängig von den FRT-Anforderungen, wie sie durch die Spannungszeit-Kennlinie in Figur 3 dargestellt sind. Um die Drehmomentfunktion der Figur 4 besser in dem Steuermodul berücksichtigen zu können, wird diese in zwei Grundfunktionen zerlegt.

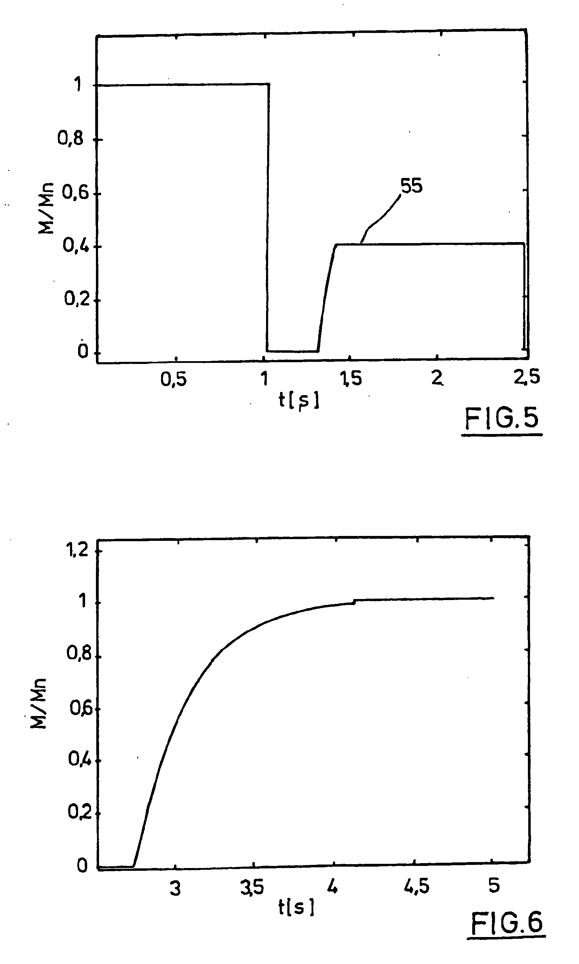

Figur 5 zeigt eine erste Grundfunktion, die den Verlauf des Drehmoments 55 nach Auftreten des Fehlerfalls beschreibt. Die erste Grundfunktion gibt vor, dass das Drehmoment zunächst auf den Wert Null abgesenkt wird, wobei der Netzfehler in Figur 5 zum Zeitpunkt t = 1s einsetzt. Nach ungefähr 0,3 Sekunden wird der Sollwert für das Drehmoment auf einen Wert von ungefähr 40 % des Nenndrehmoments angehoben. Dieser Wert ist parametrisierbar in dem Steuermodul abgelegt.

Figur 6 zeigt den Verlauf der zweiten Grundfunktion als Drehmomentfunktion nach Auftreten des Fehlers, ungefähr nach 1,7 Sekunden bezogen auf das Eintreten des Fehlers, setzt ein parabelförmiger Anstieg des Drehmoment-Sollwerts auf die Nennleistung ein. Wenn die erste und zweite Grundfunktion gemäß Figur 5 und 6 entsprechend miteinander kombiniert wird, besteht die Möglichkeit, dass die Drehmomentfunktion als erste Führungsgrößenfunktion aus dem Steuermodul 44 das Drehmoment für den Fehlerfall steuert, um eine Netztrennung zu vermeiden bzw. Detailanforderungen der Netzbetreiber zu genügen. Die zweite Führungsgrößenfunktion ist als Stromfunktion für den Blindstrom ebenso wie die Drehmomentfunktion in zwei parametrisierte Grundfunktionen unterteilt, die entsprechend den FRT-Anforderungen parametrisiert und miteinander kombiniert werden können.

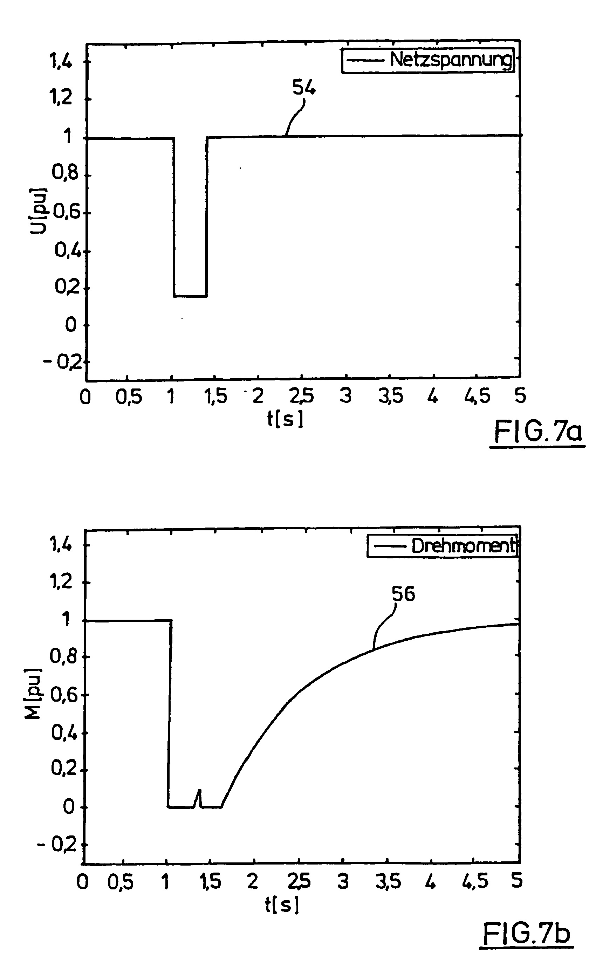

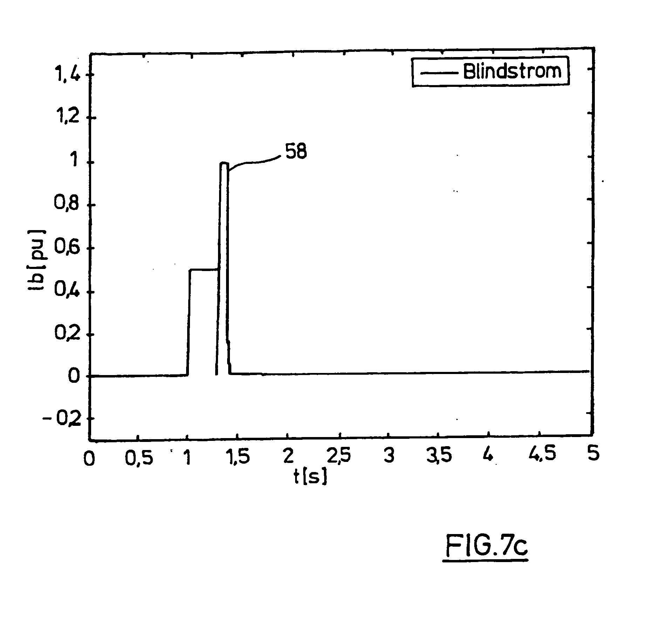

Figuren 7a bis c zeigen das Gesamtverhalten der Windenergieanlage in einem Fehlerfall. In der Figur 7a ist die Netzspannung 54 eingezeichnet, die zum Zeitpunkt t = 1s für die Dauer von 0,375 Sekunden auf einen Wert von 15 % der Netznennspannung einbricht. Deutlich zu erkennen ist in Figur 7b, dass das Drehmoment 56 der Windenergieanlage unmittelbar nach Eintreten des Fehlerfalls auf Null reduziert und nach ungefähr 0,3 Sekunden wieder hochgefahren wird. Mit Beendigung der reduzierten Netzspannung wird das Drehmoment der Windenergieanlage wieder auf Null gesenkt um nach einer definierten Zeitdauer wieder auf das Nennmoment angehoben zu werden. Ungefähr vier Sekunden nach Eintreten des Fehlerfalls hat die Windenergieanlage wieder das Nennmoment erreicht. Die Einspeisung des Blindstroms gemäß Fig. 7c setzt direkt mit dem Fehlerfall ein. In dem Zeitintervall, in dem das anfänglich reduzierte Drehmoment wieder erhöht wird, wird zur Kompensation ein erhöhter Blindstrom 58 eingespeist, der mit Beendigung des Fehlerfalls wieder reduziert wird.

**Patentansprüche**

1. Verfahren zum Betreiben einer Windenergieanlage mit einer doppelt gespeisten Asynchronmaschine (19), die einen netzseitigen und einen generatorseitigen Umrichter (20, 18) aufweist, welche mit einer Steuerung (32) angesteuert werden, das Verfahren weist folgende Schritte auf:

• In einem Normalbetrieb werden die Umrichter (20, 18) von der Steuerung (32) über Führungsgrößen für den Normalbetrieb angesteuert,

• in einem Fehlerfall des Netzes werden die Umrichter (20, 18) von mindestens einem Steuermodul (44, 46) angesteuert, das über Führungsgrößen (i) das Drehmoment und/oder die Wirkleistung sowie (ii) den Blindstrom und/oder die Blindleistung derart steuert, dass eine Trennung der Asynchronmaschine (19) vom Netz (12) nur dann erfolgt, wenn die Netzspannung eine vorbestimmte Spannungszeit-Kennlinie (48) unterschreitet,

**dadurch gekennzeichnet, dass**

• der Verlauf der Spannungszeit-Kennlinie durch mehrere vorwählbare Parameter in dem mindestens einen Steuermodul (44, 46) festgelegt wird, wobei mindestens eine erste Führungsgrößenfunktion (53) vorgesehen ist, die im Fehlerfall eine Führungsgröße für das Drehmoment und/oder die Wirkleistung vorgibt, und die mindestens zwei Grundfunktionen aufweist, von denen eine erste Grundfunktion (55) den Sollwert für das Drehmoment und/oder die Wirkleistung nach Eintreten des Fehlerfalls und eine zweite Grundfunktion (Fig. 6) den Sollwert für das Drehmoment und/oder die Wirkleistung nach Beendigung des Fehlerfalls bestimmt, sowie mindestens eine zweite Führungsgrößenfunktion (58) für den Blindstrom und/oder die Blindleistung vorgesehen ist, die im Fehlerfall eine Führungsgröße für die Ansteuerung von mindestens einem der Umrichter (20, 18) vorgibt, die mindestens zwei Grundfunktionen aufweist, von denen eine dritte Grundfunktion den Sollwert für die Blindleistung und/oder den Blindstrom nach Eintreten des Fehlerfalls und eine vierte Grundfunktion den Sollwert für die Blindleistung und/oder den Blindstrom nach Beendigung des Fehlerfalls bestimmt.

2. Verfahren nach Anspruch 1, **dadurch gekennzeichnet, dass** in dem Fehlerfall der generatorseitige Umrichter (18) gemäß der ersten Führungsgrößenfunktion (53) angesteuert wird.

3. Verfahren nach Anspruch 1 oder 2, **dadurch gekennzeichnet, dass** in dem Fehlerfall der netzseitige und/oder generatorseitige Umrichter (20, 18) gemäß der zweiten Führungsgrößenfunktion angesteuert wird.

4. Verfahren nach einem der Ansprüche 1 bis 3, **dadurch gekennzeichnet, dass** die Netzspannung gemessen und ein Fehlerfall erkannt wird, wenn die Netzspannung eine vorbestimmte Ansprechschwelle unterschreitet.

5. Verfahren nach einem der Ansprüche 1 bis 4, **dadurch gekennzeichnet, dass** ein Fehlerfall erkannt wird, wenn ein Rotorstrom und/oder eine Zwischenkreisspannung über einen vorbestimmten Grenzwert ansteigt.

6. Verfahren nach einem der Ansprüche 1 bis 5, **dadurch gekennzeichnet, dass** die erste Grundfunktion in einem ersten Zeitintervall den Drehmomenten- und/oder Wirkleistungssollwert reduziert und in einem zweiten Zeitabschnitt den Sollwert auf einen vorbestimmten Minimalwert anhebt, der kleiner oder gleich der Nennleistung bzw. das Nennmoment der Windenergieanlage ist.

7. Verfahren nach einem der Ansprüche 1 bis 6, **dadurch gekennzeichnet, dass** die erste Grundfunktion den Drehmoment- und/oder Wirkleistungssollwert abhängig von einer im Fehlerfall vorhandenen Netzspannung vorgibt.

8. Verfahren nach einem der vorhergehenden Ansprüche, **dadurch gekennzeichnet, dass** die zweite Grundfunktion von einem ersten Zeitpunkt ab ansteigend den Sollwert für das Moment und/oder die Leistung erhöht, bis zu einem vorbestimmten zweiten Zeitpunkt der Sollwert dem Nennmoment und/oder der Nennleistung der Windenergieanlage entspricht.

9. Verfahren nach einem der Ansprüche 1 bis 8, **dadurch gekennzeichnet, dass** die zweite Führungsgrößenfunktion einen zeitlichen Verlauf des Sollwerts für den Blindstrom und/oder die Blindleistung vorgibt, wenn die betragsmäßige Differenz aus Netznennspannung und Netzspannung während des Fehlerfalls größer als ein vorbestimmter Differenzwert ist.

10. Verfahren nach Anspruch 9, **dadurch gekennzeichnet, dass** die zweite Führungsgrößenfunktion für den Sollwert des Blindstroms abhängig von der betragsmäßigen Differenz: aus Netznennspannung und Netzspannung während des Fehlerfalls bestimmt wird.

11. Verfahren nach Anspruch 9 oder 10, **dadurch gekennzeichnet, dass** der maximale Sollwert für den Blindstrom während des Fehlerfalls auf einen vorbestimmten Maximalwert begrenzt ist

12. Windenergieanlage mit einer doppelt gespeisten Asynchronmaschine (19), die einen netzseitigen und einen generatorseitigen Umrichter (20, 18) und eine Steuerung (32) aufweist, welche die Umrichter über Sollwerte ansteuert, **dadurch gekennzeichnet, dass**

• mindestens zwei Steuermodule (44, 46) vorgesehen sind, von denen ein erstes Steuermodul (44) eine erste Führungsgrößenfunktion (53) für die Ansteuerung des netzseitigen und/oder des generatorseitigen Umrichters (20, 18) während eines Fehlerfalls des Netzes (12) bereitstellt,

• ein zweites Steuermodul (46) eine zweite Führungsgrößenfunktion für die Ansteuerung des netzseitigen und/oder generatorseitigen Umrichters (20, 18) während eines Fehlerfalls des Netzes (12) bereitstellt, und

• die Steuerung ein Fehlererkennungsmodul (40) aufweist, das eine Ansteuerung der Umrichter durch mindestens ein Steuermodul (44, 46) auslöst,

• wobei in den Steuermodulen eine Spannungszeit-Kennlinie (48) abgelegt ist und die Steuermodule (44, 46) die Umrichter (20, 18) derart ansteuern, dass eine Trennung der Asynchronmaschine (19) vom Netz (12) nur dann erfolgt, wenn die Netzspannung eine vorbestimmte Spannungszeit-Kennlinie (48) unterschreitet, und jedes Steuermodul mehrere vorwählbare Parameter aufweist, die den Verlauf der Spannungszeit-Kennlinie (48) und/oder der Führungsgrößenfunktionen definieren.

13. Windenergieanlage nach Anspruch 12, **dadurch gekennzeichnet, dass** ein von dem Fehlererkennungsmodul (40) gesteuerter Schalter (42) vorgesehen ist, der die Umrichter (20, 18) von der Steuerung (32) trennt und mit den Steuermodulen (44, 46) verbindet.

14. Windenergieanlage nach Anspruch 12 oder 13, **dadurch gekennzeichnet, dass** die erste Führungsgrößenfunktion mindestens zwei Grundfunktionen aufweist, von denen eine erste Grundfunktion den Sollwert für das Drehmoment und/oder die Wirkleistung nach Eintreten des Fehlerfalls und eine zweite Grundfunktion den Sollwert für den Drehmoment und/oder die Wirkleistung nach Beendigung des Fehlerfalls bestimmt.

15. Windenergieanlage nach einem der Ansprüche 12 bis 14, **dadurch gekennzeichnet, dass** die zweite Führungsgrößenfunktion mindestens zwei Grundfunktionen aufweist, von denen eine dritte Grundfunktion den Sollwert für die Blindleistung und/oder den Blindstrom nach Eintreten des Fehlerfalls und eine vierte Grundfunktion den Sollwert für die Blindleistung und/oder den Blindstrom nach Beendigung des Fehlerfalls bestimmt.

**Claims**

1. Method for operating a wind energy plant having a doubly-fed asynchronous machine (19), comprising a grid-side converter and a generator-side converter (20, 18) both being controlled by a control means (32), the method comprising the following steps:

• in a regular operating mode the converters (20, 18) are controlled by the control means (32) by means of command variables for the regular operating mode,

• in case of a grid fault, the converters (20, 18) are controlled by at least one control module (44, 46) which controls (i) the torque and/or the active power and (ii) the reactive current and/or the reactive power by means of command variables such that a disconnection of the asynchronous machine (19) from the grid (12) will be performed only if the grid voltage falls below a predetermined voltage-time-characteristic curve (48), **characterized in that**

• the shape of the voltage-time-characteristic curve is configured by a plurality of pre-selectable parameters in the at least one control module (44, 46), wherein at least one first command variable function (53) is provided, which provides a command variable for the torque and/or the active power in the case of fault, the first command variable function (53) comprising at least two basic functions, a first basic function (55) thereof determining the set point for the torque and/or the active power following the occurrence of the fault, and a second basic function (Fig. 6) determining the set point for the torque and/or the active power upon clearance of the fault, and at least a second command variable function (58) for the reactive current and/or the reactive power is provided, which provides a command variable for controlling at least one of the converters (20, 18) in the case of fault, the second command variable function comprising at least two basic functions, a third basic function thereof determining the set point for the reactive power and/or the reactive current following the occurrence of the fault, and a fourth basic function determining the set point for the reactive power and/or the reactive current upon clearance of the fault.

2. Method according to claim 1, **characterized in that** in the case of fault, the generator-side converter (18) is controlled according to the first command variable function (53).

3. Method according to claim 1 or 2, **characterized in that** in the case of fault, the grid-side and/or the generator-side converter (20, 18) is controlled according to the second command variable function.

4. Method according to any of the claims 1 to 3, **characterized in that** the grid voltage is measured and a fault is detected if the grid voltage falls below a predetermined threshold.

5. Method according to any of the claims 1 to 4, **characterized in that** a fault is detected if a rotor current and/or a link voltage rises above a predetermined threshold.

6. Method according to any of the claims 1 to 5, **characterized in that** the first basic function in a first time interval reduces the torque set point and/or active power set point and in a second time interval increases the set point to a predetermined minimum value which is lower than or equal to the nominal power or the nominal torque of the wind energy plant, respectively.

7. Method according to any of the claims 1 to 6, **characterized in that** the first basic function provides the torque set point and/or active power set point dependent on a grid voltage present in the case of fault.

8. Method according to any of the preceding claims, **characterized in that** the second basic function increases the set point for the torque and/or the power beginning at a first point in time until the set point corresponds to the nominal torque and/or the nominal power of the wind energy plant at a predetermined second point in time.

9. Method according to any of the claims 1 to 8, **characterized in that** the second command variable function provides a time curve of the set point for the reactive current and/or the reactive power if the absolute difference between the nominal grid voltage and the grid voltage during the fault is larger than a predetermined difference value.

10. Method according to claim 9, **characterized in that** the second command variable function for the set point of the reactive current is determined dependent on the absolute difference between the nominal grid voltage and the grid voltage during the fault.

11. Method according to claim 9 or 10, **characterized in that** the maximum set point for the reactive power during the fault is limited to a predetermined maximum value.

12. Wind energy plant with a doubly-fed asynchronous machine (19), the wind energy plant comprising a gid-side and a generator-side converter (20, 18) and a control means (32) controlling the converters by means of set points, **characterized in that**

  • at least two control modules (44, 46) are provided, a first control module (44) thereof providing a first command variable function (53) for controlling the grid-side and/or the generator-side converter (20, 18) during a fault of the grid (12),
  • a second control module (46) thereof providing a second command variable Function for controlling the gid-side and/or generator-side converter (20, 18) during a fault of the grid (12), and
  • the control means comprises a fault detection module (40) which triggers a control of the converters by means of at least one control module (44, 46),
  • wherein a voltage-time-characteristic curve (48) is stored in the control modules and the control modules (44, 46) control the converters (20, 18) such that a disconnection of the asynchronous machine (19) from the grind (12) will be performed only if the grid voltage falls below a predetermined voltage-time-characteristic curve (48), and each control module comprises a plurality of pre-selectable parameters which define the shape of the voltage-time characteristic curve (48) and/or of the command variable functions.

13. Wind energy plant according to claim 12, **characterized in that** a switch (42) is provided which is controlled by the fault detection module (40), the switch disconnecting the converters (20, 18) from the control means (32) and connecting the converters (20, 18) to the control modules (44, 46).

14. Wind energy plant according to claim 12 or 13, **characterized in that** the first command variable function comprises at least two basic functions, a first basic function thereof determining the set point for the torque and/or the active power following the occurrence of the fault and a second basic function determining the set point for the torque and/or the active power following the clearance of the fault.

15. Wind energy plant according to any of the claims 12 to 14, **characterized in that** the second command variable function comprises at least two basic functions, a third basic function thereof determining the set point for the reactive power and/or the reactive current following the occurrence of the fault and a fourth basic function determining the set point for the reactive power and/or the reactive current following the clearance of the fault.

**Revendications**

1. Procédé de fonctionnement d'une éolienne équipée d'une machine asynchrone à double alimentation (19), qui présente un changeur de fréquence côté réseau et un changeur de fréquence côté générateur (20, 18) qui sont commandés avec une commande (32), le procédé présentant les étapes suivantes :

• dans un fonctionnement normal, les changeurs de fréquence (20,18) sont commandés par la commande (32) par le biais de grandeurs de référence pour le fonctionnement normal,

• dans un cas de panne du réseau, les changeurs de fréquence (20, 18) sont commandés par au moins un module de commande (44, 46) qui commande par le biais de grandeurs de référence (i) le couple de rotation et/ou la puissance réelle ainsi que (ii) le courant réactif et/ou la puissance réactive de telle sorte qu'une séparation de la machine asynchrone (19) du réseau (12) ne s'effectue que lorsque la tension de réseau dépasse par le bas une ligne caractéristique de durée de tension prédéterminée (48), **caractérisé en ce que**

• l'allure de la ligne caractéristique de durée de tension est fixée par plusieurs paramètres pouvant être présélectionnés dans l'au moins un module de commande (44, 46), dans lequel au moins une première fonction de grandeur de référence (53) est prévue, laquelle prédéfinit dans le cas de panne une grandeur de référence pour le couple de rotation et/ou la puissance réelle et présente au moins deux fonctions de base, parmi lesquelles une première fonction de base (55) détermine la valeur de consigne pour le couple de rotation et/ou la puissance réelle après survenue du cas de panne et une deuxième fonction de base (Fig. 6) détermine la valeur de consigne pour le couple de rotation et/ou la puissance réelle à la fin du cas de panne, de même qu'au moins une seconde fonction de grandeur de référence (58) pour le courant réactif et/ou la puissance réactive est prévue, laquelle prédéfinit dans le cas de panne une grandeur de référence pour la commande d'au moins un des changeurs de fréquence (20, 18) qui présente au moins deux fonctions de base, parmi lesquelles une troisième fonction de base détermine la valeur de consigne pour la puissance réactive et/ou le courant réactif après survenue du cas de panne et une quatrième fonction de base détermine la valeur de consigne pour la puissance réactive et/ou le courant réactif à la fin du cas de panne.

2. Procédé selon la revendication 1, **caractérisé en ce que** le changeur de fréquence côté générateur (18) est commandé dans le cas de panne selon la première fonction de grandeur de référence (53).

3. Procédé selon la revendication 1 ou 2, **caractérisé en ce que** le changeur de fréquence côté réseau et/ou côté générateur (20, 18) est commandé dans le cas de panne selon la seconde fonction de grandeur de référence.

4. Procédé selon l'une quelconque des revendications 1 à 3, **caractérisé en ce que** la tension de réseau est mesurée et un cas de panne est détecté lorsque la tension de réseau dépasse par le bas un seuil de réponse prédéterminé.

5. Procédé selon l'une quelconque des revendications 1 à 4, **caractérisé en ce qu'**un cas de panne est détecté lorsqu'un courant de rotor et/ou une tension du circuit intermédiaire augmente au-dessus d'une valeur limite prédéterminée.

6. Procédé selon l'une quelconque des revendications 1 à 5, **caractérisé en ce que** la première fonction de base réduit dans un premier intervalle de temps la valeur de consigne de couple de rotation et/ou de puissance réelle et augmente dans une seconde période la valeur de consigne à une valeur minimale prédéterminée qui est inférieure ou égale à la puissance nominale ou au couple nominal de l'éolienne.

7. Procédé selon l'une quelconque des revendications 1 à 6, **caractérisé en ce que** la première fonction de base prédéfinit la valeur de consigne de couple de rotation et/ou de puissance réelle en fonction d'une tension de secteur présente dans le cas de panne.

8. Procédé selon l'une quelconque des revendications précédentes, **caractérisé en ce que** la deuxième fonction de base augmente à partir d'un premier instant de manière croissante la valeur de consigne pour le couple et/ou la puissance jusqu'à un second instant prédéterminé où la valeur de consigne correspond au couple nominal et/ou à la puissance nominale de l'éolienne.

9. Procédé selon l'une quelconque des revendications 1 à 8, **caractérisé en ce que** la seconde fonction de grandeur de référence prédéfinit une allure temporelle de la valeur de consigne pour le courant réactif et/ou la puissance réactive lorsque la différence en termes de montant entre tension nominale de réseau et tension de réseau pendant le cas de panne est supérieure à une valeur de différence prédéterminée.

10. Procédé selon la revendication 9, **caractérisé en ce que** la seconde fonction de grandeur de référence est déterminée pour la valeur de consigne du courant réactif en fonction de la différence en termes de montant entre tension nominale de réseau et tension de réseau pendant le cas de panne.

11. Procédé selon la revendication 9 ou 10, **caractérisé en ce que** la valeur de consigne maximale pour le courant réactif est limitée pendant le cas de panne à une valeur maximale prédéterminée.

**12.** Eolienne équipée d'une machine asynchrone à double alimentation (19), qui présente un changeur de fréquence côté réseau et un changeur de fréquence côté générateur (20, 18) et une commande (32) qui commande les changeurs de fréquence par le biais de valeurs de consigne, **caractérisée en ce que**

• au moins deux modules de commande (44, 46) sont prévus, parmi lesquels un premier module de commande (44) met à disposition une première fonction de grandeur de référence (53) pour la commande du changeur de fréquence côté réseau et/ou côté générateur (20, 18) pendant un cas de panne du réseau (12),
• un second module de commande (46) met à disposition une seconde fonction de grandeur de référence pour la commande du changeur de fréquence côté réseau et/ou côté générateur (20, 18) pendant un cas de panne du réseau (12), et
• la commande présente un module de détection de panne (40) qui déclenche une commande des changeurs de fréquence par au moins un module de commande (44, 46),
• dans laquelle une ligne caractéristique de durée de tension (48) est déposée dans les modules de commande et les modules de commande (44, 46) commandent les changeurs de fréquence (20, 18) de telle sorte qu'une séparation de la machine asynchrone (19) du réseau (12) ne s'effectue que lorsque la tension de réseau dépasse par le bas une ligne caractéristique de durée de tension prédéterminée (48), et chaque module de commande présente plusieurs paramètres pouvant être présélectionnés qui définissent l'allure de la ligne caractéristique de durée de tension (48) et/ou des fonctions de grandeur de référence.

**13.** Eolienne selon la revendication 12, **caractérisée en ce qu'**un commutateur (42) commandé par le module de détection de panne (40) est prévu, lequel sépare les changeurs de fréquence (20, 18) de la commande (32) et les relie aux modules de commande (44, 46).

**14.** Eolienne selon la revendication 12 ou 13, **caractérisée en ce que** la première fonction de grandeur de référence présente au moins deux fonctions de base, parmi lesquelles une première fonction de base détermine la valeur de consigne pour le couple de rotation et/ou la puissance réelle après survenue du cas de panne et une deuxième fonction de base détermine la valeur de consigne pour le couple de rotation et/ou la puissance réelle à la fin du cas de panne.

**15.** Eolienne selon l'une quelconque des revendications 12 à 14, **caractérisée en ce que** la seconde fonction de grandeur de référence présente au moins deux fonctions de base, parmi lesquelles une troisième fonction de base détermine la valeur de consigne pour la puissance réactive et/ou le courant réactif après survenue du cas de panne et une quatrième fonction de base détermine la valeur de consigne pour la puissance réactive et/ou le courant réactif à la fin du cas de panne.

FIG.1

FIG.2

FIG.3

FIG.4

FIG.5

FIG.6

FIG.7a

FIG.7b

FIG.7c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005027301 A1

- WO 2004067958 A1

**In der Beschreibung aufgeführte Nicht-Patentliteratur**

- **I. ERLICH et al.** Integration of wind power into the German high voltage transmission grid. *Power Engineering Society General Meeting,* Juni 2007, 1-8